(19) Europäisches Patentamt / European Patent Office / Office européen des brevets

(11) **EP 1 500 721 B1**

(12) **EUROPEAN PATENT SPECIFICATION**

(45) Date of publication and mention
of the grant of the patent:
**24.07.2013 Bulletin 2013/30**

(51) Int Cl.:
*C25D 9/08* (2006.01)    *H01M 14/00* (2006.01)
*H01L 31/04* (2006.01)    *H01G 9/20* (2006.01)

(21) Application number: **03715512.4**

(86) International application number:
**PCT/JP2003/003834**

(22) Date of filing: **26.03.2003**

(87) International publication number:
**WO 2003/083183 (09.10.2003 Gazette 2003/41)**

(54) **METHOD FOR PRODUCING A POROUS ZINC OXIDE THIN-FILM FOR SUBSTRATE OF DYE-SENSITIZED SOLAR CELL.**

VERFAHREN ZUR HERTSTELLUNG EINER PORÖSEN ZINKOXID-DÜNNFILM FÜR DAS SUBSTRAT EINER FARBSTOFFSENSIBILISIERTEN SOLARZELLE

PROCEDE DE PRODUCTION D'UNE COUCHE MINCE POREUSE D'OXYDE DE ZINC POUR SUBSTRAT DE CELLULE SOLAIRE SENSIBLE AU COLORANT.

(84) Designated Contracting States:
**AT BE BG CH CY CZ DE DK EE ES FI FR GB GR HU IE IT LI LU MC NL PT RO SE SI SK TR**

(30) Priority: **29.03.2002 JP 2002094016**
**07.01.2003 JP 2003001483**

(43) Date of publication of application:
**26.01.2005 Bulletin 2005/04**

(73) Proprietor: **Nagoya Industrial Science Research Institute**
**Nagoya-shi, Aichi 460-0008 (JP)**

(72) Inventors:
• **MINOURA, Hideki**
**c/o Gifu University Faculty of**
**Gifu-shi, Gifu 501-1112 (JP)**
• **YOSHIDA, Tsukasa**
**c/o Gifu University Faculty of**
**Gifu-shi, Gifu 501-1112 (JP)**

(74) Representative: **Beacham, Annabel Rose**
**Dehns**
**St Bride's House**
**10 Salisbury Square**
**London**
**EC4Y 8JD (GB)**

(56) References cited:
**EP-A- 0 794 270    JP-A- 8 260 175**
**JP-A- 10 140 373    US-A1- 2001 027 806**

**Description**

BACKGROUND OF THE INVENTION

Field of the Invention

The invention relates to a porous zinc oxide thin film for a substrate of a dye-sensitized solar cell obtained by cathodic electrodeposition in the presence of a template compound and a zinc oxide/dye composite thin film suitable as a photoelectrode material of the dye-sensitized solar cell obtained by allowing the porous zinc oxide thin film to adsorb the dye, and a method for producing thereof, and a dye-sensitized solar cell using the zinc oxide/dye composite thin film as the photoelectrode material.

Description of the Related Art

Solar cells are noticed today as an environmentally sound power generation technology using inexhaustible resources. Since the report by Graetzel in 1991 (Nature, 353, 737), dye-sensitized solar cells capable of producing with a lower cost than conventional silicon solar cells have been a focus of worldwide attention. The dye-sensitized solar cell is produced using a transparent substrate of a transparent glass prepared by coating a fluorine-doped tin oxide film, and a sol of a metal oxide such as titanium oxide is applied on the surface of the conductive transparent substrate by a doctor blade method, squeezee method, spin coating method or screen printing method. The coating layer is baked at a temperature of 400 to 500°C to form a particle film, while a ruthenium complex is used as the dye.

Although the theoretical limit of photoelectric conversion ratio of such dye-sensitized solar cell is considered to be 33%, a sufficient photoelectric conversion ratio has not been attained yet. Accordingly, various improvements have been proposed, and an example thereof is a solar cell having a spectrosensitized dye layer such as a transition metal complex on the surface of a metal ion-doped titanium oxide semiconductor (Japanese Patent Application Publication (JP-B) No. 8-15097).

Japanese Patent Application Laid-Open (JP-A) No. 2002-184476 proposes a method for producing porous photoelectric conversion semiconductor in which an aqueous solution of an inorganic metal salt contains a water soluble dye, which is retained on the surface of the semiconductor having a specific surface area of 1 to 100 $m^2/g$ by an electrochemical method, and a solar cell using the semiconductor as an electrode material.

However, most of the conventionally proposed dye-sensitized solar cell uses a baked semiconductor, and the transparent substrate is restricted to a heat resistant substance in the dye-sensitized solar cell using the baked semiconductor. Consequently, selection of the transparent substrate is restricted and it is difficult to use inexpensive plastics as the transparent substrate.

While the baking process is not needed in the dye-sensitized solar cell using a zinc oxide thin film prepared by electrodeposition as the semiconductor without adding any dyes, the surface area of the thin film is small and a sufficient amount of the dye cannot be introduced after forming the thin film. Therefore, it was a problem that the photoelectric conversion ratio can be hardly enhanced.

JP-A No. 2002-184476 does not specifically disclose an art for removing the dye from the porous photoelectric semiconductor and for re-adsorbing the dye.

The object of the invention is to provide a porous zinc oxide thin film for a substrate of a dye-sensitized solar cell capable of obtaining a high photoelectric conversion ratio without applying any heat treatment to enable various transparent substrates to be selected, a zinc oxide/dye composite thin film for a photoelectrode obtained by permitting the porous zinc oxide thin film to adsorb the dye, and a dye-sensitized solar cell using the zinc oxide/dye composite thin film as the photoelectrode material.

SUMMARY OF THE INVENTION

The porous zinc oxide thin film for the substrate of the dye-sensitized solar cell of the invention has pores formed by cathodic electrodeposition by mixing an electrolytic solution containing zinc salt with a template compound in advance in the presence of a desired substrate. A zinc oxide thin film comprising the template compound adsorbed on the inner surface of the thin film is deposited on the substrate, and the template compound is desorbed from the zinc oxide thin film.

The template compound refers to a compound as defined in claim 1 adsorbed on the inner surface of zinc oxide thin film deposited by cathodic electrodeposition. The template compound is not included within a bulk of zinc oxide by chemisorption, instead it may be adsorbed on the inner surface of the zinc oxide thin film by forming a complex with zinc ions. Such compound preferably has an electrochemical reduction potential in the range of - 0.7 to -1.2 V. The compound is reduced in the growing process of the zinc oxide thin film to form a complex with zinc ions as a result of increased nucleophilicity of the template compound. The reduced template compound is adsorbed inner surface of the thin film of the zinc oxide crystals to suppress further crystal growth, and three-dimensionally linked nano-pores with a size a little larger than the molecular size of the template compound are formed in the crystal grains. The template compound has anchor groups such as carboxylate, sulfonate or phosphate groups, and is an aromatic compound having electrochemically reducible n-electrons. Examples of the compound are as follows:

xanthene dyes such as eosin Y, fluorescein, erythrosine B, phloxine B, rose Bengal, fluorocreson, mercurochrome, dibromofluorescein and pyrogallol red; coumarin dyes such as coumarin 343; and triphenylmethane dyes such as bromophenol blue, bromothymol blue and phenolphthalein. Other examples include cyanine dyes, melocyanine dyes, porphyrin, phthalocyanine, perylene tetracarboxylic acid derivatives, indigo dyes and oxonol dyes; natural pigments such as anthocyanin, gardenia pigments, tumeric pigments, safflower pigments, carotenoid pigments, cochineal pigments and paprika pigments; and polypyridine complexes such as Ru and Os complexes. Since most of these compounds are the dyes, the template compound may be called as a dye in the descriptions hereinafter.

The zinc oxide thin film deposited by cathodic electrodeposition is formed in an electrolytic bath containing a zinc salt in the presence of a desired substrate. The zinc salts available include zinc halides such as zinc chloride, zinc bromide and zinc iodide, zinc nitrate and zinc perchlorate. While oxygen is supplied (bubbled) when the zinc halide is used, the bubbles should be devised not to contact the electrode since the dye is oxidized to unable desorption of the dye upon contact of the oxygen bubbles with the electrode. Examples of counter-electrode for using the zinc salt include zinc, gold, platinum and silver. An ordered zinc oxide thin film structure is obtained by cathodic electrodeposition, and selectability of the substrate can be expanded since heat treatment is not necessary as titanium oxide is.

The porous zinc oxide thin film for the substrate of the dye-sensitized solar cell of the present invention is obtained by cathodic electrodeposition of the template compound after mixing the template compound in the electrolytic bath in advance, and by applying a desorption method of the template compound adsorbed on the inner surface of the zinc oxide thin film. Desorption of the template compound from the surface of the zinc oxide thin film permits many pores to be formed on the surface of the zinc oxide thin film to result in an increase of the specific surface area by forming a quite porous surface. While the template compound may be desorbed by washing the surface of the thin film with an aqueous base (alkaline) solution such as sodium hydroxide and potassium hydroxide when the template compound has anchor groups such as carboxylate groups, sulfonate groups and phosphate groups, the desorption method is not restricted thereto, and the thin film may be appropriately washed depending on the kind of the template compound. The aqueous alkaline solution used for washing preferably has a pH of 10 to 13. The template compound is preferably desorbed before the template compound is oxidized.

The porous zinc oxide thin film for the substrate of the dye-sensitized solar cell of the present invention preferably has pores formed by the steps comprising mixing the template compound in advance with an electrolytic solution containing the zinc salt in the presence of a desired substrate, subjecting the mixed solution to cathodic electrodeposition for uniformly and forcibly transporting materials on the surface of the substrate, depositing the zinc oxide thin film comprising the template compound adsorbed on the inner surface of the thin film, and applying method for desorbing the template compound from the zinc oxide thin film.

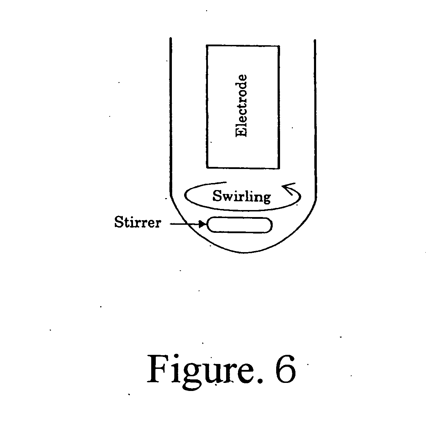

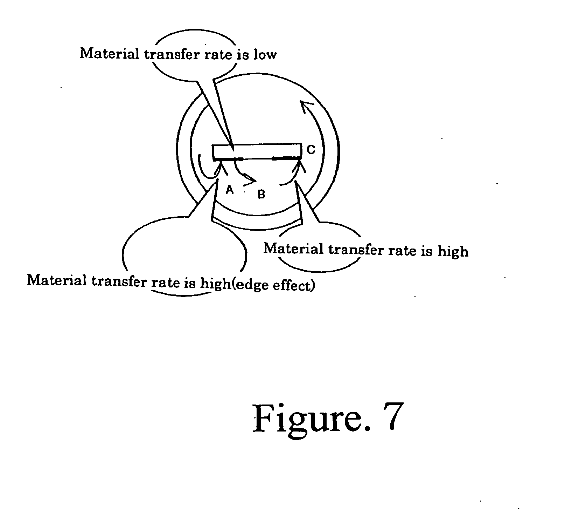

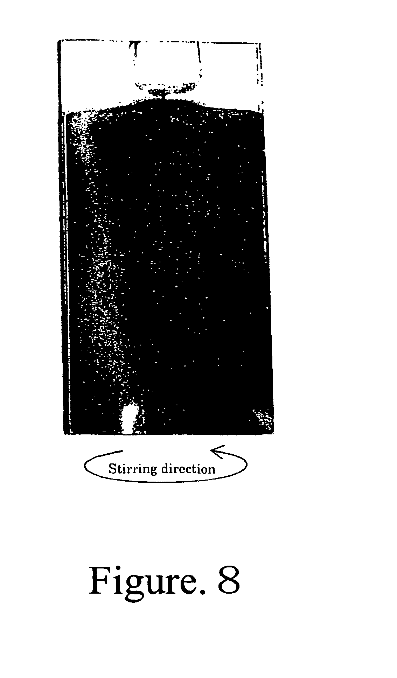

While uniform and forcible material transport on the surface of the substrate should be devised for making cathodic electrodeposition of the zinc oxide thin film a practical process, the amount of the dye (dye flux) arriving at the surface of the electrode per unit time is particularly important. Accordingly, while it is possible to agitate the solution by placing a stirrer in the electrolytic bath in an electrolysis device using conventional fixed electrodes as shown in Figs. 6 and 7, the material transport rate is high at the point A (an edge effect), slow at the point B and high at the point C (see Fig. 7) by generating an eddy current to render material transport on the surface of the substrate not uniform. Since the thin film growth rate increases as the amount of the dye (dye flux) arriving at the surface of the substrate per unit time is larger, the film becomes non-uniform by being directly influenced by non-uniform dye flux. Actually, non-uniform thickness of the film not only gives poor appearance but also poor reproducibility due to a problem in the function of the photoelectrode as will be described below, as is evident from Fig. 8 showing a zinc oxide/tetrabromophenol blue composite film obtained when the electrode is vertically disposed in the electrolytic bath and the electrolytic solution is agitated with a stirrer. Accordingly, it is inevitable to establish a production method for realizing uniform growth of the film for the practical use in the solar cell.

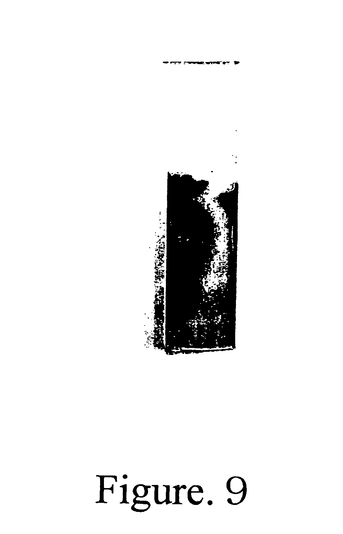

On the contrary, one may suppose that a uniform thickness of the film would be obtained when the electrolytic solution is not agitated at all, since uniform material transport on the electrode substrate is difficult by agitating the electrolytic solution using a stirrer. However, it is impossible. The zinc oxide/tetrabromophenol blue composite film is non-uniform and quite thin as shown in Fig. 9 when the film is obtained without agitating the electrolytic solution at all.

While the method for depositing the film is not particularly restricted so long as the film is deposited by cathodic electrodeposition by uniform and forcible material transport on the surface of the substrate, this is possible by allowing the electrode itself to move, by allowing the electrolytic solution to uniformly move, or by both method. Examples of the device for allowing the electrode itself to move include an electrode electrolysis device of a rotary disk (simply referred to a rotary electrode electrolysis device hereinafter), a rotary cylinder electrode electrolysis device, a vibrating electrode electrolysis device, a swing electrode electrolysis device and a constant feed electrode electrolysis device. Examples of the device for allowing the electrolytic solution to uniformly move include a flow electrolysis device, a wall-jet electrolysis device, and an electrolysis device with a linear motion comb-shaped stirrer. Most of these devices are widely used in electrochemical analysis. In the rotary electrode disk electrolysis device, a perpendicular flow of the electrolytic solution to the surface of the electrode is generated by allowing a flat disk electrode to rotate in its plane direction (rotate around an axis perpendicular to the surface) to restrict the thickness of a diffusion layer in the vicinity of the electrode. In the rotary cylinder electrode electrolysis device, the side face of a cylindrical electrode serves as the electrode, and a parallel flow of the electrolytic solution relative to the surface of the electrode is generated by allowing the electrode to rotate around the center axis in order to control the thickness of a diffusion layer in the vicinity of the electrode.

In the vibrating electrode electrolysis device, the electrode is allowed to vibrate at a given frequency and amplitude to forcibly transport materials. The direction of motion of the electrode of this type may be either perpendicular or parallel to the surface of the electrode. While the thickness of the diffusion layer in the vicinity of the electrode is periodically changed by the perpendicular motion, the average material transport rate in the electrolytic solution can be controlled to be constant since the electrode vibrates at a given frequency and amplitude. While the swing electrode electrolysis device is based on the same concept as the vibrating electrode, the electrode is not always required to be flat and a curved surface may be acceptable since the device takes advantage of a motion with a lower frequency (not higher than 100 Hz) and larger amplitude. A uniform and relatively parallel flow of the electrolytic solution is generated by continuously feeding the electrode, instead of reciprocal movement of the electrode, at a given speed parallel to the surface of the electrode in the constant feed electrode electrolysis device in order to control the thickness of the diffusion layer in the vicinity of the electrode. This device is suitable for continuous production since a conductive plastic film substrate is continuously supplied from a roll. In the flow electrolysis device, a constant flow rate of the stream of the electrolytic solution is generated with a pump so that the stream is parallel to a fixed flat electrode in order to control the thickness of the diffusion layer in the vicinity of the electrode to be constant. In the wall-jet electrolysis device, the thickness of the diffusion layer in the vicinity of the electrode is controlled to be constant by blowing the electrolytic solution onto the electrode from a nozzle driven with a pump in the direction perpendicular to a fixed flat electrode. It is necessary to control the flow rate and the distance from the nozzle to the surface of the electrode in addition to reducing the size of the electrode to be smaller than the diameter of the nozzle in order to avoid eddy current from being generated.

In the electrolysis device with a linear motion comb-shaped stirrer, a parallel flow of the electrolytic solution in the vicinity of the electrode is controlled by using a comb-shaped stirrer placed close to the surface of the electrode substrate, and the stirrer linearly reciprocate in the direction parallel to the surface of the electrode substrate. While the thickness of the diffusion layer is periodically changed, the action of this stirrer is the same as the actions of the vibrating electrode and swing electrode electrolysis devices in that the average material transport rate is controlled to be constant by allowing the comb-shaped stirrer to move at a constant frequency and amplitude. The size of the comb-shaped stirrer is desirably larger than the size of the electrode so that the electrode is accommodated within the range of the stroke of the electrode.

The porous zinc oxide thin film for the substrate of the dye-sensitized solar cell of the present invention is deposited by cathodic electrodeposition of the electrolytic solution containing a zinc salt and mixed with the template compound in advance in the presence of a desired substrate. The zinc oxide thin film is deposited on the substrate with the template compound adsorbed on the inner surface of the zinc oxide thin film, and the template compound is desorbed from the zinc oxide thin film thereafter. The temperate compound is preferably desorbed with a desorption ratio (referred to a dye desorption ratio hereinafter) of not less than 90% to form pores.

The dye desorption ratio in the porous zinc oxide thin film for re-adsorbing the dye is preferably not less than 80%, more preferably not less than 90%, because the function of the photoelectrode when the zinc oxide/dye composite thin film obtained by re-adsorption of a dye is used as a photoelectrode material of the dye-sensitized solar cell is markedly decreased when the dye desorption ratio is lower than 80%. The dye desorption ratio is defined by {[total quantity of the introduced dye (template compound)] - [remaining quantity of the dye (template compound) after an alkali treatment])/[the total quantity of the introduced dye (template compound)]. The dye is preferably re-adsorbed after drying the porous zinc oxide thin film, otherwise the function of the photoelectrode decreases.

When the zinc salt in the porous zinc oxide thin film for the substrate of the dye-sensitized solar cell is a zinc halide, the molar quantity of the zinc ions arriving on the surface of the substrate per unit time is preferably twice or more of the molar quantity of the oxygen molecules reduced on the surface of the substrate per unit time, and/or the molar quantity of the template compound molecules supplied on the surface of the substrate per unit time is preferably 1/1000 or more of the molar quantity of the oxygen molecules supplied on the surface of the substrate.

When the zinc salt is a zinc halide, the molar quantity (flux) of the template compound molecule supplied on the surface of the electrode per unit time is preferably 1/100 to 1/10 of the molar quantity (flux) of the oxygen molecules supplied on the surface of the electrode per unit time. The molar quantity (flux) of the zinc ions supplied on the surface of the electrode per unit time is preferably twice or more of the molar quantity (flux) of the oxygen molecules reduced on the surface of the electrode. A porous zinc oxide thin film, which enables the template compound to be removed by washing with an alkali and a sensitizing dye to be re-adsorbed, may be obtained by controlling the concentration and uniform and forcible material transport so that the feed rates of the template compound, oxygen molecule and zinc ion satisfy the proportions as described above.

The substrate is transparent at least to a light required for a photoelectric conversion reaction. Examples of the substrate include an ITO glass substrate comprising a thin deposition film of a compound (ITO) comprising 95% of indium oxide and 5% of tin oxide, and a FTO glass substrate comprising a thin deposition film of tin oxide doped with fluorine (FTO) on a transparent glass plate. Since zinc oxide is not required to be baked at a high temperature, a transparent plastic such as conductive PET may be used as the substrate instead of a transparent glass plate. A mass production is possible by using the plastic as the substrate by winding the plastic film into a coil and by depositing the zinc oxide/dye composite thin film thereon.

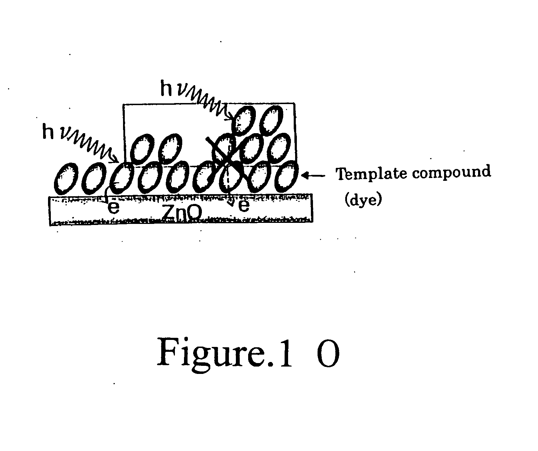

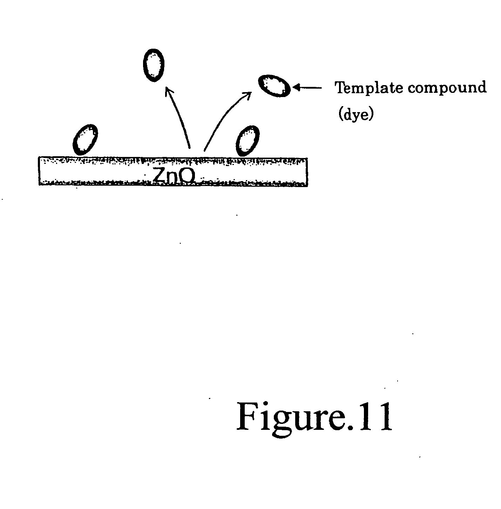

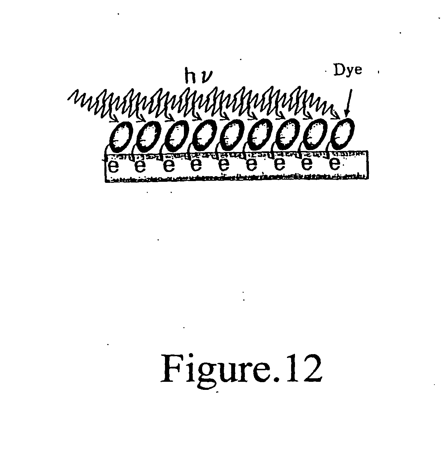

The zinc oxide/dye composite thin film is obtained by allowing a dye to be adsorbed on the porous zinc oxide thin film obtained above. The porous zinc oxide thin film abundant in pores serves as an intermediate substrate for producing a photoelectrode material of the dye-sensitized solar cell obtained by adsorbing the dye. When the same dye compound as the template compound is adsorbed (re-adsorption) after desorption of the template compound, the photo-sensitization function of the dye molecules is improved over the photo-sensitization function of the initially adsorbed dye molecules (initial absorption). This is because, as shown in Fig. 10, an excess amount of the dye as the template compound in a quantity excess to the quantity necessary for covering the surface of the zinc oxide thin film as a monolayer is introduced in the film after cathodic electrodeposition, and multilayers of the dye are partly formed. Since the dye molecules as the template compound introduced as a multilayer is not directly bonded to zinc oxide, it cannot function as a sensitizer. Fig. 11 shows that all the dyes as the template compound are once removed by alkali washing. Fig. 12 shows that an ideal dye monolayer is formed by re-adsorption of the dye after removing the template compound. All the dye molecules are directly bonded to zinc oxide, and function as the sensitizer. Accordingly, it may conjectured that characteristics as the photoelectrode are improved by introducing the dye into the film in an amount just required for allowing the dye to function as the sensitizer by re-adsorption. It also enables various dyes to be selected and absorbed in the pores. Consequently, solar cells having various features with a quite high photocurrent can be produced by using the zinc oxide/dye composite thin film as the photoelectrode material of the dye-sensitized solar cell. Different kinds of dyes may be adsorbed on the porous zinc oxide thin film together as a substrate. Alternatively, the different kinds of dyes may be adsorbed as a mixture in the same region of the porous zinc oxide thin film, or the different kinds of dyes may be adsorbed in respective different regions of the thin film. In other words, a first dye and a second dye are adsorbed on a first and second regions, respectively, of the porous zinc oxide thin film. The first and second dyes as used herein may be mixtures of a plurality of dyes.

Various dyes may be used for adsorbing on zinc oxide. Examples of them include xanthene dyes such as eosin Y, fluorescein, erythrosine B, phloxine B, rose Bengal, fluorocreson, mercurochrome, dibromofluorescein and pyrogallol red; coumarin dyes such as coumarin 343; and triphenylmethane dyes such as bromophenol blue, bromothymol blue and phenolphthalein. Other examples include cyanine dyes, melocyanine dyes, porphyrin, phthalocyanine, perylene tetracarboxylic acid derivatives, indigo dyes and oxonol dyes; natural pigments such as anthocyanin, gardenia pigments, tumeric pigments, safflower pigments, carotenoid pigments, cochineal pigments and paprika pigments; and polypyridine complexes such as Ru and Os complexes.

Examples of the electrolytic solution used for the dye-sensitized solar cell include a solution containing a redox electrolyte, a semi-solid electrolyte comprising a gel of the redox electrolyte, and a hole-transfer material of a p-type semiconductor such as CuI, CuSCN, NiO, $Cu_2O$ and KI. Examples of redox pairs used in the electrolyte include iodine/iodide and bromine/bromide pairs. Various aqueous solutions such as an aqueous mixed solution of acetonitrile/ethylene carbonate may be used. The electrolytic solution preferably contains a bulky electrolyte that prevents the dye adsorbed on the porous zinc oxide thin film from being desorbed. Favorable examples of such electrolyte include a combination of a halogen with at least one selected from cesium halide, halogenated quaternary alkylammonium salts, halogenated imidazolium, halogenated thiazolium, halogenated oxazolium, halogenated quinolium and halogenated pyridinium. Particular examples of the combination include a combination of iodine with at least one selected from cesium iodide; quaternary alkylammonium iodides such as tetraethylammonium iodide, tetrapropylammonium iodide, tetrabutylammonium iodide, teprapentylammonium iodide, tetrahexylammonium iodide, tetraheptylammonium iodide and trimethylammonium iodide; imidazolium iodides such as 3-methylimidazolium iodide and 1-propyl-2,3-dimethylimidazolium iodide; thiazolium iodides such as 3-ethyl-2-methyl-2-thiazolium iodide, 3-ethyl-5-(2-hydroxyethyl)-4-methilthiazolium iodide and 3-ethyl-2-methylbenzothiazolium iodide; oxazolium iodides such as 3-ethyl-2-methyl-benzoxazolium iodide; quinolinium iodides such as 1-ethyl-2-methylquinolinium iodide; and pyridinium iodides. The other example is a combination of a quaternary alkylammonium bromide and bromide.

While zinc oxide as the most preferable material constructing the thin film has been described above, other metal oxides such as titanium oxide, tungsten oxide, barium titanate, tin oxide, indium oxide and lead oxide may be used as the material. An electrolytic solution containing an inorganic salt of the same metal is used for cathodic electrodeposition.

BRIEF DESCRIPTION OF THE DRAWINGS

Fig. 1 shows the absorption spectra of a zinc oxide/EY thin film and a porous zinc oxide thin film prepared by desorption of EY from zinc oxide/EY the thin film, and the working photocurrent spectrum of the zinc oxide/EY composite thin film;

Fig. 2 shows the absorption spectra of a zinc oxide/coumarin 343 composite thin film and a porous zinc oxide thin film, and the working photocurrent spectrum;

Fig. 3 shows the absorption spectrum and working photocurrent spectrum of the zinc oxide/EY composite thin film;

Fig. 4 shows the absorption spectra of the zinc oxide/EY thin film with re-adsorption of EY after desorption of EY from the zinc oxide/EY thin film in Fig. 3 and porous zinc oxide thin film, and the working photocurrent spectrum of the zinc oxide/EY thin film;

Fig. 5 shows the working photocurrent spectra of the zinc oxide/EY thin film without and with drying, respectively, prepared by re-adsorption of EY after desorption of EY;

Fig. 6 is an illustrative front view of non-uniform material transport on the surface of the plate-shaped electrode placed in an eddy current generated by the stirrer;

Fig. 7 is an illustrative plane view of non-uniform material transport on the surface of the plate-shaped electrode placed in an eddy current generated by the stirrer;

Fig. 8 shows the zinc oxide/tetrabromophenol blue thin film (before desorption of the template compound) prepared by cathodic electrodeposition in the condition shown in Figs. 6 and 7;

Fig. 9 shows the zinc oxide/tetrabromophenol blue composite film (before desorption of the template compound) prepared by cathodic electrodeposition without agitating the electrolytic solution at all;

Fig. 10 shows the dye as the template compound covering the surface of the zinc oxide thin film after cathodic electrodeposition;

Fig. 11 shows that all the dyes as the template compound are once removed by washing with an alkali;

Fig. 12 shows the re-adsorbed dye after removing the template compound;

Fig. 13 shows I-V curves measured using a rotating Au electrode having a small oxygen overvoltage in aqueous KCl solution with variously changed oxygen partial pressures;

Fig. 14 shows Levich plots of the redox current (potential -0.8 V vs, SCE) in an aqueous KCl solution (70°C) with a concentration of 0.1 M;

Fig. 15 shows I-V curves measured using a ZnO coated rotating Au electrode in a mixed aqueous solution (70°C) of 5 mM $ZnCl_2$ + 0.1 M KCl saturated with oxygen;

Fig. 16 shows Koutecky-Levich plots obtained from the relations in Fig. 15; and

Fig. 17 shows the changes of the I-V curves by adding eosin Y.

DESCRIPTION OF THE PREFERRED EMBODIMENTS

[Preparation of porous zinc oxide thin film]

Eosin Y (abbreviated as EY hereinafter) was used as a template compound having anchor groups. The bath used for forming the zinc oxide thin film (referred to a zinc oxide/EY thin film (after initial adsorption) hereinafter) comprising EY adsorbed on the inner surface of the thin film is an aqueous solution of 30 $\mu$M eosin Y (40 ml) prepared so that the concentrations of $ZnCl_2$ and KCl are 5 mM and 0.09 M, respectively.

The electrolysis device was a single chamber cell having a three electrode system comprising an ITO glass substrate used as a working electrode, a Zn wire used as a counter electrode and a saturated calomel electrode used as a reference electrode (SCE). The ITO glass substrate was immersed in a 45% aqueous nitric acid solution for 2 minutes, and was used after a surface treatment. The thin film was deposited by fixing the substrate in an water bath at 70°C, and by applying constant voltage electrolysis with an electrolysis time of 30 minutes (for desorption test) or 60 minutes (for measurement of re-oxidation) at a voltage in the range of -0.8 V to -1.1 V (VS. SCE). Oxygen was bubbled in the solution for 15 minutes before electrolysis, and bubbling was continued during electrolysis.

EY was desorbed by immersing in a 0.1 M aqueous KOH solution without drying the zinc oxide/EY thin film (after initial adsorption) obtained by electrolysis for 30 minutes followed by washing with water to obtain a porous zinc oxide thin film. EY (template compound) is desirably desorbed from the zinc oxide/EY thin film (after initial adsorption) before EY (template compound) is oxidized. In other word, EY (template compound) is preferably desorbed from the zinc oxide/EY thin film (after initial adsorption) immediately after electrodeposition, or while EY remains non-oxidized. While the zinc oxide/EY thin film after initial adsorption was washed with an alkali without drying, it may be dried (dehydrated) before washing.

[Preparation of zinc oxide/dye composite film]

After drying the porous zinc oxide thin film obtained above at 150°C for 30 minutes, the thin film was placed in a 5 mM ethanol solution of coumarin 343 (a dye), and the ethanol solution was refluxed at 100°C to prepare a zinc oxide/coumarin 343 composite thin film corresponding to the zinc oxide/dye composite thin film. A zinc oxide/EY(re-adsorbed) thin film was prepared by allowing the thin film to re-adsorb EY by the same method as described above. [Evaluation of zinc oxide/dye composite thin film (optoelectrochemical measurement)]

An absorption spectrum and a working photoelectric current were measured using the ITO glass substrate as a reference. A three-electrode cell comprising the zinc oxide/coumarin 343 composite thin film prepared.as a working electrode, a Pt electrode as a counter electrode and Ag/Ag$^+$ electrode as a reference electrode were used for the measurement. The electrolytic solution used contained ethylene carbonate as well as 0.5 M potassium iodide and 0.03 M of iodine. The working photocurrent spectrum was measured by applying a DC voltage using CEP-200 spectrometric sensitivity measuring apparatus.

The zinc oxide/EY thin film (after re-adsorption) prepared by re-adsorbing EY as a dye after desorption of EY from the zinc oxide/EY thin film (after initial adsorption) was also evaluated.

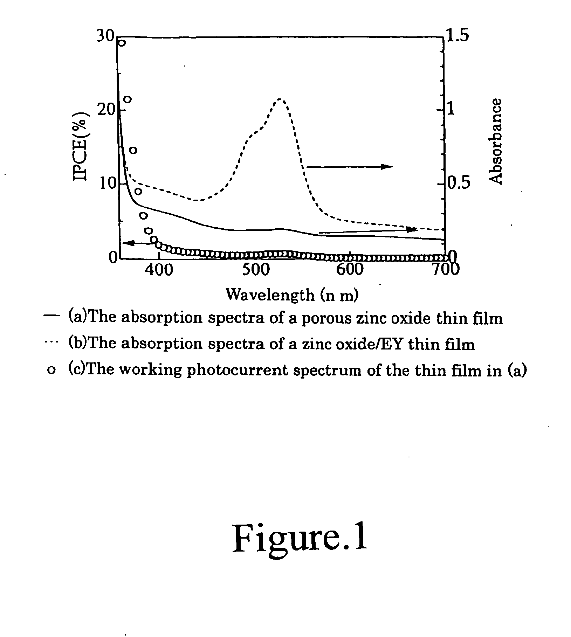

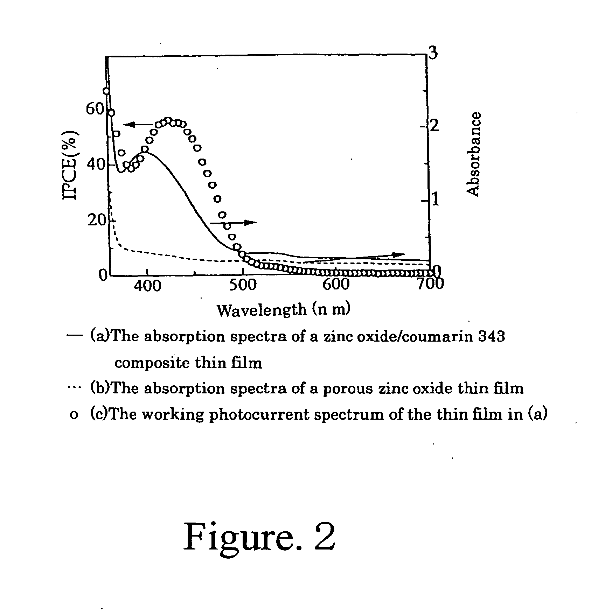

While adsorption of coumarin 343 by refluxing was visually confirmed from yellow coloring, it could be also confirmed by observing clear absorption at 400 nm at the absorption band of the dye as shown in Figs. 1 and 2. A sensitized current by coumarin 343 was also confirmed from the measurement of the working photocurrent spectrum, and IPCE (incident photon to current conversion efficiency) was as high as not less than 50%.

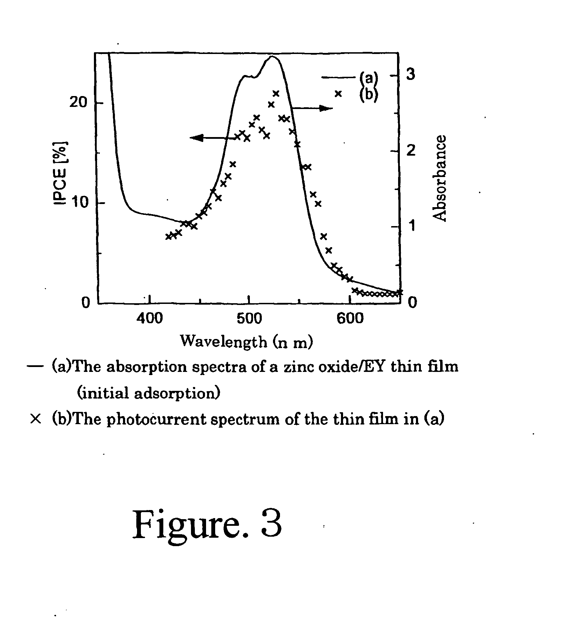

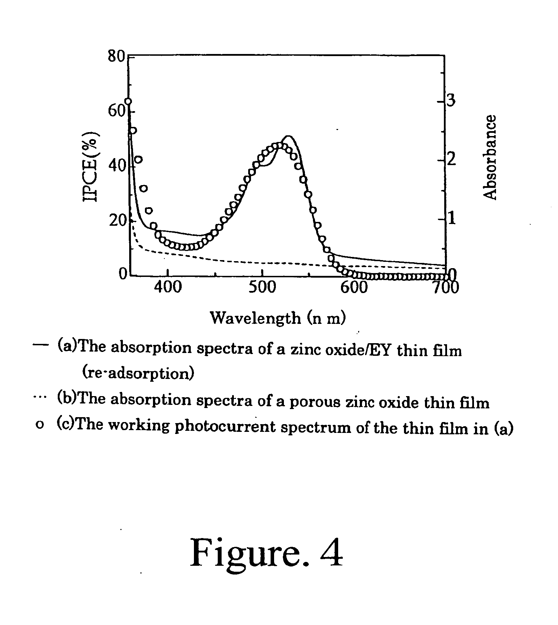

Figs. 3 and 4 show the result of evaluations of the zinc oxide/EY thin film (after initial adsorption) and zinc oxide/EY thin film (after re-adsorption), respectively. The latter showed an IPCE of about 50% as compared with the IPCE of 20% in the former. This result suggests that nano-pores a little larger than the molecular size of the template compound was formed in the zinc oxide thin film (after initial adsorption) on which the template compound was adsorbed to improve optical sensitization effect of the dye molecule while production of a dye-sensitized solar cell having a higher photoelectron value is enabled. In other word, the photoelectron effect was remarkably improved over that after the initial adsorption by allowing the template compound (dye) to be initially adsorbed followed by re-adsorption of the dye after desorption.

[Investigation on the effect of drying treatment of the porous zinc oxide thin film, if any]

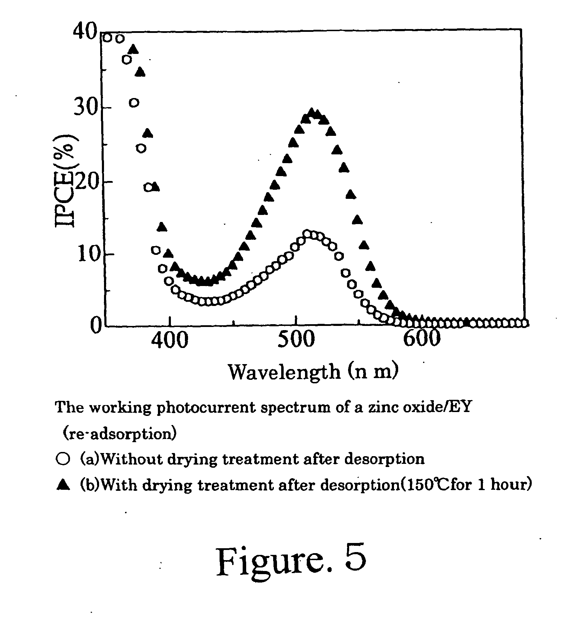

After desorption of EY from the zinc oxide/EY thin film (after initial adsorption) prepared under the condition above, EY was re-adsorbed by drying the porous zinc oxide thin film at 150°C for 1 hour, or without drying. AS shown in Fig. 5, IPCE of the thin film after drying was superior to that of the thin film without drying in a wide wavelength region, and it was revealed that the drying treatment is effective for enhancing the photoelectron characteristics.

[Reproducibility of zinc oxide/eosin Y composite thin film]

The experiments shown in Table 1 were performed using a rotary electrode electrolysis device. The reference experiment was also carried out with an electrolysis device using a fixed electrode by agitating the solution with a stirrer under the same condition as in other experiments.

Table 1 clearly shows that the amount of adsorption of eosin Y was excellent in reproducibility without non-uniform adsorption when the materials were uniformly and forcibly transported on the surface of the substrate using the rotary electrode electrolysis device. On the other hand, the amount of adsorption of eosin Y was quite low in the electrolysis device using the fixed electrode, and reproducibility thereof was low (data are not shown).

TABLE 1

| Reproducibility of electrodeposition on ZnO/Eosin Y Composite Film | | | |
|---|---|---|---|
| Experiment No. | Amount of Flowed Electricity (C/cm$^2$) | Film Thickness ($\mu$m) | Amount of Adsorption of Eosin Y ($\times 10^{-8}$mol/cm$^2$) |
| 1 | 1.68 | 2.6 | 8.9 |
| 2 | 1.74 | 2.7 | 9.2 |
| 3 | 1.70 | 2.7 | 9.8 |

(continued)

| Reproducibility of electrodeposition on ZnO/Eosin Y Composite Film | | | |
|---|---|---|---|
| Experiment No. | Amount of Flowed Electricity (C/cm$^2$) | Film Thickness ($\mu$m) | Amount of Adsorption of Eosin Y ($\times 10^{-8}$mol/cm$^2$) |
| 4 | 1.70 | 2.6 | 9.0 |
| 5 | 1.73 | 2.4 | 9.8 |
| 6 | 1.72 | 2.6 | 9.4 |
| Reference | 0.88 | 0.9 | 3.1 |
| (note) The rotary electrode electrolysis device was used. The composition of the electrolytic bath was 5mM ZnCl$_2$+0.1MKCl+50$\mu$m eosin Y with saturation of oxygen; bath temperature 70 °C, rotation speed of electmde 500rpm, electrode voltage 1.0V (vs. SCE), electrolysis time 20 minutes | | | |

[Characteristics of zinc oxide/eosin Y composite film obtained by changing the rotation speed using the rotary electrode electrolysis device]

The experiments shown in Table 2 were performed. The reference experiment was carried out using a fixed electrode electrolysis device with agitating of the solution under the same condition as in other experiments.

Table 2 clearly shows that a porous zinc oxide thin film was stably obtained with a high dye desorption ratio by uniform and forcible material transport on the surface of the substrate. Photoelectric characteristics such as the photocurrent density and IPCE were revealed to be significantly excellent when a dye was re-adsorbed on the porous thin film having a dye desorption ratio of exceeding 90%. The photoelectric characteristics were excellent in the porous thin film on which the dye was re-adsorbed, although the amount of the re-adsorbed dye was smaller than the introduced amount of the dye (the initial amount of adsorption). This may be suggested that the dye that functions as a sensitizer by re-adsorption completely covers the surface of the zinc oxide thin film as a monolayer as has been described above. Since the ratio of the amount of the dye, which was desorbed by washing the optical electrode after re-adsorption of the dye with an alkali with a pH of 10 to 13, to the amount of the remaining non-desorbed dye after the alkali treatment, which was obtained by dissolving zinc oxide by an aqueous conc. ammonia treatment of the electrode after desorption of the dye, is 60 to 70:10 as a measure when the dye desorption ratio is not less than 90% (see Table 2), the ratio of (the amount of the non-desorbed dye)/(the amount of desorbed dye) quantified above is usually 1/7 to 1/6.

Accordingly, the photoelectrode may be supposed to be produced using the porous zinc oxide thin film for the substrate of the dye-sensitized solar cell having a dye desorption ratio of not less than 90%, when the ratio of (the amount of the non-desorbed dye)/(the amount of desorbed dye) is smaller than the ratio as described above.

TABLE 2

| Characteristic of Zinc Oxide/Eosin Y Composite Film Obtained by Changing Rotation Speed Using Rotary Electrode Electrolysis Device[1] | | | | | | | | | | |
|---|---|---|---|---|---|---|---|---|---|---|
| Rotation Speed (rpm) | Amount of Flowing Electricity ($C/cm^2$) | Film Thickness ($\mu m$) | Amount of Introduced Dye[1] ($nmol/cm^2$) | Photocurrent Density[3] ($mA/cm^2$) | IPCE[4] (%) | Amount of Remaining Dye after Alkali Treatment[5] ($nmol/cm^2$) | Dye Desorption Ratio[6] (%) | Amount of Re-Adsorbed Dye[7] ($nmol/cm^2$) | Photocurrent Density[8] ($mA/cm^2$) | IPCE[9] |
| 0 | 0.34 | 0.80 | 8.0 | 0.34 | 4.3 | 1.3 | 83.8 | 7.4 | 2.02 | 38.2 |
| 100 | 0.89 | 1.1 | 48 | 0.22 | 1.75 | 1.1 | 97.7 | 37 | 4.94 | 78.9 |
| 300 | 1.5 | 2.8 | 100 | 0.51 | 6.88 | 2.1 | 97.9 | 61 | 6.30 | 87.3 |
| 500 | 2.0 | 3.0 | 98 | 1.2 | 15.7 | 0.18 | 99.8 | 60 | 4.98 | 89.3 |
| 700 | 2.2 | 3.4 | 96 | 0.35 | 7.47 | - | - | - | - | - |
| Reference | 0.88 | 0.90 | 31 | 0.28 | - | - | - | - | - | - |

1. Composition of electorolytic bath: 5mM $ZnC_2$+0.1MKCl+50$\mu$M Eosin Y mixed solution ; oxygen saturated ; bath temperature 70 °C; electrode potential 1.0V(vs. SCE); electrolysis time 20 minutes 2. total amount of the dye introduced just after electrodeposition ; the amount of the dye is quantified by absorption spectrum after dissolving the film in aqueous conc. ammonia. 3. characteristics of photoelectrode of the composite film just after electrodeposition ; photocurrent is measured at an electrode potential of 0 V (vs. Ag/Ag$^+$) in an acetonitrile solution containing 0.3M LiI+0.03M $I_2$ by irradiating a pseudo- sunlight (AM 1.5, 100mW/cm$^2$) 4. photoelectrode characteristics of the composite film immediately after electrodeposition ; the maximum value of incident photon to current conversion efficiency (near 520nm) is measured by irradiating a monochromatic light in an acetonitrile solution containing 03MLiI+0.03M $I_2$ 5. the amount of remaining dye is quantified by dissolving the film in aqueous conc. ammonia after immersing the film in aqueous dilute KOH solution (pH 10.5). 6. [ (total amount of introduced dye)- (amount of remaining dye after alkali treatment)] / [total amount of introduced dye] 7. the sum of the amount of remaining eosin Y after desorption of the dye and the amount of eosin Y re-adsorbed on the film by refluxing 8. photoelectrode characteristics of the film on which eosin Y is re-adsorbed after desorption of the dye ; photocurrent is measured at an electrode potential of 0V (vs. Ag/Ag$^+$) by irradiating a pseudo- sunlight (AM 1.5, 100mW/cm$^2$) in a mixed solution of acetonitrile containing 0.3M N (Pr)$_4$I+0.03M $I_2$ and ethylene carbonate (volume ratio 1/4). 9. photoelectrode characteristics of a film on which eosin Y is re-adsorbed after desorption of the dye ; maximum value of incident photon to current conversion efficiency (near 520nm) is measured by irradiating a monochromatic light in a mixed solution of acetonitrile containing 0.3M N (Pr)$_4$I+0.03M $I_2$ and ethylene carbonate (volume ratio 1/4).

[Characteristics of zinc oxide/eosin Y composite film obtained by changing the concentration of the dye in the bath using the rotary electrode electrolysis device]

The experiments shown in Table 3 were performed using the rotary electrode electrolysis device. The reference experiment was carried out using an electrolysis device having a fixed electrode under the same condition as in other experiments.

Table 3 clearly shows that a porous zinc oxide thin film having a high dye desorption ratio is stably obtained by controlling the dye concentration at a give level or more when the concentration of the dye is changed at a constant rotation speed of the rotary electrode electrolysis device. It was revealed that photoelectric characteristics such as photocurrent density and IPCE are excellent when the dye is re-adsorbed on the thin film having a dye desorption ratio of exceeding 90%.

TABLE 3

| Characteristics of Zinc Oxide/Eosin Y Composite Film Obtained by Changing the Dye Concentration in the Bath Using Rotary Electrode Electrolysis Device[1] | | | | | | | | | | |
|---|---|---|---|---|---|---|---|---|---|---|
| Dye Concentration ($\mu$m) | Amount of Flowing Electricity (C/cm$^2$) | Film Thinkness ($\mu$m) | Amount of Introduced Dye[2] (nmol/cm$^2$) | Photocurrent Density[3] (mA/cm$^2$) | IPCE[4] (%) | Amount of Remaining Dye after Alkali Treatment[5] (nmol/cm$^2$) | Dye Desorption Ratio[6] (%) | Amount of Re-Adsorbed Dye[7] (nmol/cm$^2$) | Photocurrent Density[8] (mA/cm) | IPCE[9] (%) |
| 0 | 0.30 | 0.80 | 0 | - | - | - | - | - | - | - |
| 5 | 1.6 | 2.0 | 14 | 0.020 | 0.27 | 13 | 7.1 | 14 | 0.10 | 1.54 |
| 10 | 1.7 | 1.8 | 30 | 0.009 | 0.13 | 6 | 80.0 | - | 1.09 | 18.4 |
| 30 | 1.8 | 2.2 | 52 | 0.75 | 10.9 | 2 | 96.2 | 37 | 6.23 | 87.7 |
| 50 | 2.0 | 3.0 | 98 | 1.2 | 15.7 | 0.18 | 99.8 | 60 | 5.51 | 89.3 |
| 60 | 2.0 | 2.9 | 85 | 0.65 | 7.84 | - | - | - | - | - |
| Reference | 0.88 | 0.90 | 31 | 028 | - | - | | - | - | - |

1. Composition of electorolytic bath: 5mM ZaCl$_2$+0.1MKCl+50$\mu$M Eosin Y mixed solution ; oxygen saturated ; bath temperature 70 °C; rotation speed of electrode 500rpm, electrode potential 1.0V(vs. SCE); electrolysis time 20 minutes 2. total amount of the dye introduced just after electrodeposition ; the amount of the dye is quantified by absorption spectrum after dissolving the film in aqueous conc. ammonia. 3. characteristics of photoelectrode of the composite film just after electrodeposition ; photocurrent is measured at an electrode potential of 0 V (vs. Ag/Ag$^+$) in an acetonitrile solution containing 0.3M LiI+0.03M L by irradiating a pseudo- sunlight (AM 1.5, 100mW/cm$^2$) 4. photoelectrode characteristics of the composite film immediately after electrodeposition ; the maximum value of incident photon to current conversion effciency (near 520nm) is measured by irradiating a monochromatic light in an acetonitrile solution containing 03MLiI+0.03M I$_2$ 5. the amount of remaining dye is quantified by dissolving the film in aqueous conc. ammonia after immersing the film in aqueous dilute KOH solution (pH 10.5). 6. [(total amount of introduced dye)- (amount of remaining dye after alkali treatment)] / [total amount of introduced dye] 7. the sum of the amount of remaining eosin Y after desorption of the dye and the amount of eosin Y re-adsorbed on the film by refluxing 8. photoelectrode characteristics of the film on which eosin Y is re-adsorbed after desorption of the dye ; photocurrent is measured at an electrode potential of 0V (vs. Ag/Ag$^+$) by irradiating a pseudo- sunlight (AM 1.5, 100mW/cm$^2$) in a mixed solution of acetonitrile containing 0.3M N (Pr) $_4$I+0.03M I$_2$ and ethylene carbonate (volume ratio 1/4). 9. photoelectrode characteristics of a film on which eosin Y is re-adsorbed after desorption of the dye ; maximum value of incident photon to current conversion efficiency (near 520nm) is measured by irradiating a monochromatic light in a mixed solution of acetonittile containing 0.3M N (Pr)$_4$I+0.03M I$_2$ and ethylene carbonate (volume ratio 1/4).

[Investigation of proper ratio between oxygen and dye]

A proper ratio between oxygen and the dye was investigated for obtaining a uniform porous zinc oxide thin film being excellent reproducibility and having a high dye desorption ratio.

It was shown form the experiment using the rotary electrode electrolysis device that the proper condition for preparing the zinc oxide/eosin Y thin film is not less than 10 μM of the eosin Y concentration in the solution and not less than 100 rpm of the rotation speed of the electrode. While the growth rate of zinc oxide is affected by the transport speed of oxygen molecules rather than the transport speed of zinc ions, the electron transfer speed related to the reduction reaction of the oxygen molecule was increased by adding eosin Y. This may be comprehended that the growth rate of the thin film is increased as a result of increased current by increasing the concentration of eosin Y in the solution and caused by increasing the rotation speed of the electrode. In other word, it is essential for obtaining a high performance electrode and a structure that enables re-adsorption to control the amount of oxygen and the dye transported on the surface of the electrode per unit time (flux).

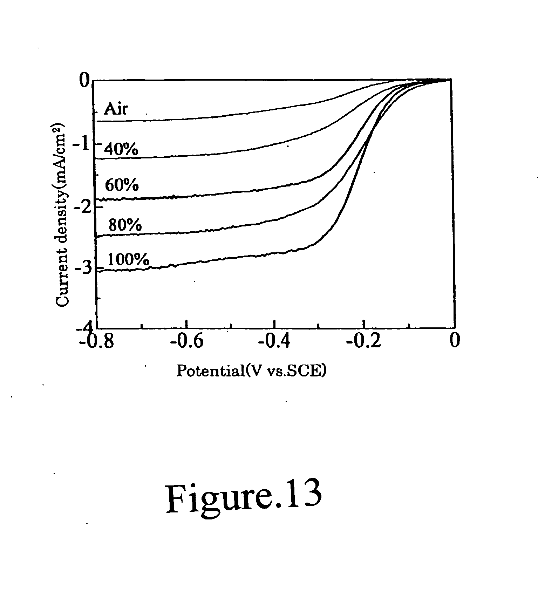

The reason why proper control of the flux of oxygen and the dye is essential may be elucidated by considering the principle for forming the thin film. Fig. 13 shows I-V curves measured using a rotary Au electrode having a small oxygen permeation potential in an aqueous KCl solution containing various partial pressures of oxygen. The oxygen partial pressure was changed to 20% (air), 40%, 60%, 80% and 100% in the 0.1 m aqueous KCl solution (70°C) using the rotary electrode (500 rpm). A region where the current is constant irrespective of the potential appears in the potential region smaller than about -0.4 V, and the current density is proportional to the partial pressure of oxygen. This current is restricted by the diffusion limit of oxygen, and the diffusion limit current ($I_D$) is defined by the following Levich equation:

$$Id = 0.62nFAC_{bulk}\ D^{2/3}\nu^{-1/6}\omega^{1/2}$$

wherein n is the number of electrons related to the reaction, and n = 4 in the following reduction reaction of oxygen:

$$O_2 + 2H_2O + 4e^- \rightarrow 4OH^-$$

F is Farad constant (96,500 C), A is a (projection) surface area ($cm^2$) of the electrode, $C_{bulk}$ is the concentration of a reaction species in the bulk solution, the saturation concentration of oxygen at 70°C is $0.414 \times 10^{-6}$ mol·cm$^{-3}$, D is a diffusion coefficient ($cm^2 \cdot s^{-1}$) of the reaction species, ν is a dynamic viscosity of the solution (the dynamic viscosity of water is $0.414 \times 10^{-9}$ cm$^2 \cdot$s$^{-1}$ at 70°C), and ω is an angular velocity (rad·s$^{-1}$) of rotation of the rotary electrode.

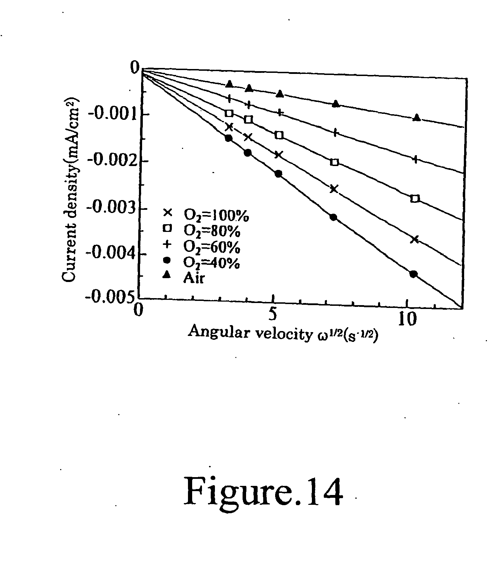

The plot of the relation between the current density in the plateau region and $\omega^{1/2}$ (Levich plot) is linear as shown in Fig. 14, and the slope is proportional to the oxygen partial pressure. The diffusion coefficient of oxygen is determined to be $6.2 \times 10^{-5}$ cm$^2 \cdot$s$^{-1}$ by solving the Levich equation from this relation. It is also confirmed that the reaction rate of the reduction reaction of eosin Y in an aqueous solution is determined by diffusion (Th. Pauporte, T. Yoshida, A. Goux and D. Lincot, J. Electroanal. Chem., 534, 55-64, 2002), and the diffusion coefficient of eosin Y at 70°C was determined to be $1.4 \times 10^{-5}$ cm$^2 \cdot$s$^{-1}$ from the measurement using the rotary electrode.

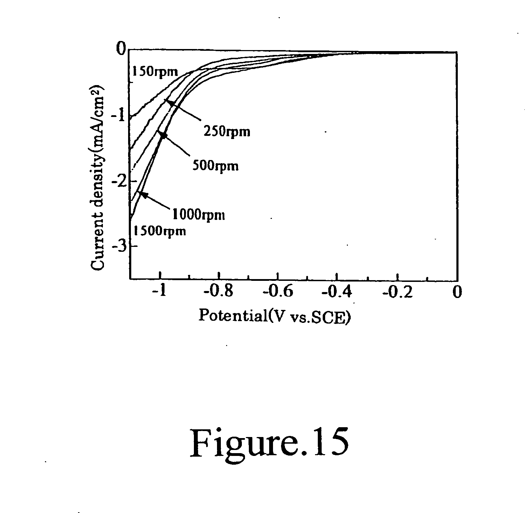

Since the overvoltage of oxygen reduction increases in electrodeposition of the zinc oxide thin film from a bath containing zinc chloride, the current plateau based on the diffusion limit of oxygen in the I-V curve shown in Fig. 15 does not appear. However, a tendency for increasing the current in accordance with the increase of the rotation speed of the electrode suggests that a diffusion layer is formed in the vicinity of the electrode. The current density is described by a Koutecky-Levich equation when the electrode reaction rate is governed by both material transport and charge transfer rate. This means that the current (I) is related as follows with the diffusion limit current ($I_d$) and the current ($I_k$) restricted by kinetics of the reaction:

$$I = I_d^{-1} + I_k^{-1}$$

$$I_k = nFAk_{tr}C_{surf}$$

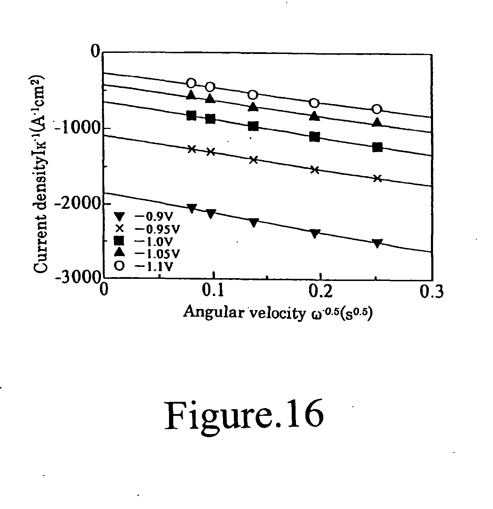

wherein $k_{tr}$ denotes a charge transfer rate constant (cm·s$^{-1}$), and $C_{surf}$ denotes the concentration (mol·cm$^{-3}$) of the reaction species on the surface of the electrode. A linear relation as shown in Fig. 16 is obtained by plotting the relation between the stationary current and $\omega^{-1/2}$ at each potential (Koutecky-Levich plot) in accordance with the data in Fig. 15, and it was confirmed that the electrodeposition reaction of zinc oxide proceeds in the Koutecky-Levich region where the reaction is affected by both the material transport rate and charge transfer rate. The cross point of the line with the Y-axis denotes $I_k^{-1}$, which shows a relation that $I_k^{-1}$ increases as the electrolysis potential is lower, or as the overvoltage is increased.

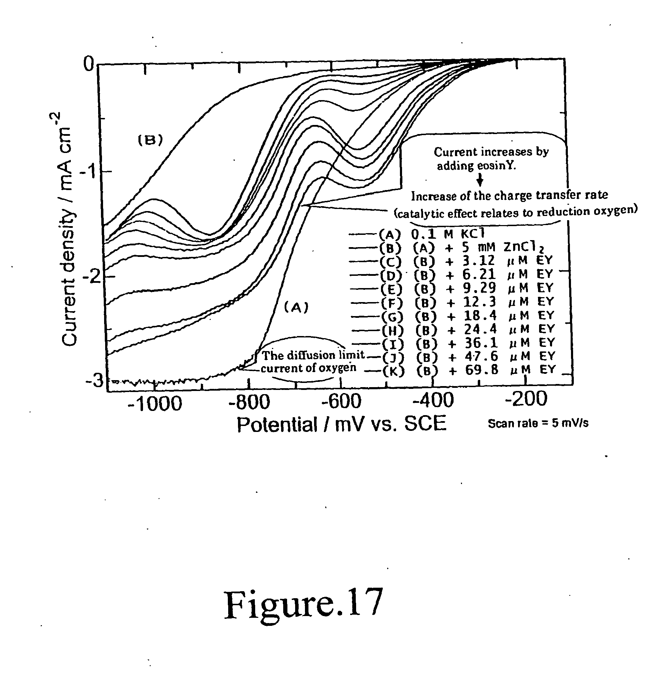

The thin film growth rate increases by adding the dye, because the dye molecule acts as a catalyst for the reduction reaction of oxygen to increase the charge transfer rate. Fig. 17 shows I-V curves against the amount of added eosin Y. A $SnO_2$ glass electrode was used as the working electrode, the rotation speed was fixed at 500 rpm, and the solution was saturated with oxygen. The I-V curves are denoted in the order of (c) to (k) from below the curve (B). A plateau of the current appears from near -0.8 V in a 0.1 M aqueous KCl solution (A) containing neither zinc chloride nor eosin Y. The electrode used has about 0.4 V higher overvoltage than the Au electrode shown in Fig. 13, the absolute value of the diffusion limit current density is approximately the same between the electrodes. It may be comprehended that the diffusion limit current density is restricted by the limit of oxygen transport. It is also confirmed that the growth rate of the zinc oxide thin film is kinetically suppressed since the current decreases by adding 5 mM of $ZnCl_2$ as shown in (B). The current density is remarkably increased by adding a trace amount of eosin Y. The increase of the current is already evident in a region having a larger potential than the reducing potential (about -1 v) of eosin Y. It is evident that this increase of the current is due to an improvement of the charge transfer rate related to the reduction of oxygen caused by the catalytic effect of eosin Y, and is not caused by the reduction reaction of eosin Y itself. While the reducing current increases as the concentration of eosin Y increases, the extent of increase never exceeds the material transport limit of oxygen.

Only the process in which growth of zinc oxide is partially determined by the oxygen transfer rate in electrodeposition of the zinc oxide/dye composite thin film is required to control uniform and forcible material transport and to adjust the dye concentration in an appropriate range. It may be conclude that the flux of the dye affects by the charge transfer rate in the reduction reaction of oxygen. While the thin film was deposited from an oxygen saturated solution, the concentration of oxygen may be reduced.

Since the catalytic effect for the reduction of oxygen is different when the dye used is not eosin Y, the proper value of the flux is supposed to vary. The proper ranges in preparing the zinc oxide/eosin Y composite thin film are estimated to be not less than $1 \times 10^{-8}$ mol·cm$^{-3}$ with respect to the concentration of eosin Y and not less than 100 rpm with respect to the rotation speed of the electrode where saturation concentration of oxygen at 70°C is $0.414 \times 10^{-6}$ mol·cm$^{-3}$.

The fluxes of oxygen and eosin Y are calculated from the Levich equation based on the diffusion constants of oxygen and eosin Y ($6.2 \times 10^{-5}$ cm$^2$·s$^{-1}$ and $1.9 \times 10^{-5}$ cm$^2$·s$^{-1}$, respectively). Then, it is considered be appropriate to control the flux of eosin Y in the range not smaller than $3.27 \times 10^{-1}$ mol·cm$^{-2}$·s$^{-1}$ when the oxygen flux is $3.63 \times 10^{-9}$ mol·cm$^{-2}$·s$^{-1}$. This means that the ratio of the number of the oxygen molecules to the number of the dye molecules is about 100:1, which is the ratio of the number of the molecules that arrive on the surface of the electrode per unit time. On the other hand, the diffusion coefficient of the zinc ions is as small as $3.6 \times 10^{-6}$ cm$^2$s$^{-1}$, although the concentration of the zinc ion is restricted to 5 mM. The overall reaction for forming the zinc oxide film is expressed by $Zn^{2+} + 1/2O_2 + 2e^- \rightarrow ZnO$. In order that transport of the zinc ion does not determine the reaction rate, the flux of the zinc ion is required to be twice or more of the oxygen flux, and the concentration of the zinc ion should be not less than 5.5 mM in the bulk solution. However, the concentration of the zinc ion is not a problem since the reduction reaction rate of oxygen does not actually reach the material transport limit.

Use of the rotary electrode is not always required for practically depositing the thin film, and a device capable of uniform and forcible material transport is sufficient for depositing the film. However, it is necessary that the device is able to maintain the oxygen flux to be not less than $10^{-9}$ mol·cm$^{-2}$·s$^{-1}$ and to control the dye flux in the range of not less than $10^{-11}$ mol·cm$^2$·s$^{-1}$ that is two order lower than the former value. These fluxes may be controlled by controlling conversion of the solution and by the motion of the electrode as well as by controlling the concentration of the materials (oxygen and dye).

According to the invention, the porous substrate for forming the photoelectrode material of the dye-sensitized solar cell can be produced with a low cost since the substrate is produced by cathodic electrodeposition without baking. The invention provides a substrate of the zinc oxide/dye composite film that is uniform, reproducible and excellent in photoelectric characteristics.

The invention also provides a zinc oxide/dye composite thin film for the photoelectrode material useful for producing a dye-sensitized solar cell having an excellent photoelectric conversion rate with a low cost since a large quantity of the dye is adsorbed in the pore formed without baking.

The invention enables a dye-sensitized solar cell excellent in the photoelectric conversion efficiency to be produced with a low production cost by using the zinc oxide/dye composite thin film as the photoelectrode material without any baking process. Since various transparent substrates can be used without being restricted by heat resistance of the substrate, various dye-sensitized solar cells such as a colorful solar cell can be produced by using a plastic as a transparent substrate. The production cost of the dye-sensitized solar cell is reduced by using cheap plastics for the transparent substrate. Various shapes of the dye-sensitized solar cell such as a non-planer shape are possible by forming the zinc oxide/dye composite thin film by molding the transparent substrate into various shapes in advance. Mass production of the dye-sensitized solar cell is possible by winding the plastic used for the plastic substrate into a coil and by depositing the zinc oxide/dye composite thin film on the plastic.

While preferable embodiments of the invention has been described with reference to the examples, various modifications and substitutions of the invention are possible without departing from the the scope of the invention. Accordingly, the invention is set forth as only examples, and the drawings and embodiments disclosed in the specification should not be comprehended to restrict the scope of the claims.

## Claims

1. A method for producing a porous zinc oxide thin film for a substrate of a dye-sensitized solar cell comprising the steps of:

   applying cathodic electrodeposition to an electrolytic solution containing a zinc salt mixed with a template compound in advance in the presence of a desired substrate,
   depositing a zinc oxide thin film comprising the template compound adsorbed on the inner surface of the thin film on the substrate, and
   applying means for desorbing the template compound from the surface of the thin film,
   wherein the template compound has anchor groups selected from carboxylate, sulfonate and phosphate groups and is an aromatic compound having electrochemically reducible $\pi$-electrons.

2. The method for producing a porous zinc oxide thin film according to claim 1, wherein
   the template compound is desorbed from the surface of the thin film by washing with an aqueous base solution before oxidation of the template compound.

3. The method for producing the porous zinc oxide thin film for the substrate of the dye-sensitized solar cell according to Claim 1 or Claim 2, wherein
   the template compound has an electrochemical reduction potential in the range of -0.7 V to -1.2 V.

4. The method for producing a porous zinc oxide thin film according to any preceding claim wherein the template compound is desorbed with a desorption ratio of not less than 90%.

5. A method according to any one of the preceding claims, said zinc oxide thin film being obtained using a zinc halide as a zinc salt under a condition for permitting the molar quantity of zinc ions arriving on the surface of a substrate per unit time to be at least twice of the molar quantity of oxygen molecules reduced in unit time, and/or under a condition for permitting the molar quantity of a template compound supplied on the surface of the substrate per unit time to be at least 1/1000 of the molar quantity of oxygen molecules supplied on the surface of the substrate per unit time.

## Patentansprüche

1. Ein Verfahren zur Herstellung eines porösen Zinkoxid-Dünnfilms für ein Substrat einer farbstoffsensibilisierten Solarzelle, umfassend die Schritte:

   Anwenden von kathodischem galvanischem Abscheiden einer elektrolytischen Lösung, die ein Zinksalz enthält, welches im Voraus mit einer Templatverbindung gemischt wird, in Gegenwart eines gewünschten Substrats,
   Abscheiden eines Zinkoxid-Dünnfilms, der die Templatverbindung adsorbiert auf der Innenfläche des Dünnfilms umfasst, auf dem Substrat und
   Anwenden von Mitteln zur Desorption der Templatverbindung von der Oberfläche des Dünnfilms,
   wobei die Templatverbindung eine Ankergruppe, ausgewählt aus Carboxylat-, Sulfonat- und Phosphatgruppen aufweist und eine aromatische Verbindung ist, welche elektrochemisch reduzierbare rr-Elektronen aufweist.

2. Das Verfahren zur Herstellung eines porösen Zinkoxid-Dünnfilms gemäß Anspruch 1, wobei
   die Templatverbindung von der Oberfläche des Dünnfilms durch Waschen mit einer wässrigen, basischen Lösung vor der Oxidation der Templatverbindung desorbiert wird.

3. Das Verfahren zur Herstellung des porösen Zinkoxid-Dünnfilms für ein Substrat einer farbstoffsensibilisierten Solarzelle gemäß Anspruch 1 oder Anspruch 2, wobei
die Templatverbindung ein elektrochemisches Reduktionspotential im Bereich von -0,7 V bis -1,2 V aufweist.

4. Das Verfahren zur Herstellung eines porösen Zinkoxid-Dünnfilms gemäß einem der vorherigen Ansprüche, wobei die Templatverbindung mit einem Desorptionsanteil von nicht weniger als 90% desorbiert wird.

5. Ein Verfahren gemäß einem der vorherigen Ansprüche, wobei der Zinkoxid-Dünnfilm unter Verwenden eines Zinkhalogenids als Zinksalz, unter einer Bedingung, die es zulässt, dass die molare Menge an Zinkionen, die auf der Oberfläche eines Substrats pro Zeiteinheit ankommt mindestens die zweifache molaren Menge an reduzierten Sauerstoffmolekülen pro Zeiteinheit beträgt und/oder unter einer Bedingung, die es zulässt, dass die molare Menge einer Templatverbindung, die der Oberfläche des Substrats pro Zeiteinheit zugeführt wird mindestens 1/1000 der molaren Menge an Sauerstoffmolekülen, die der Oberfläche des Substrats pro Zeiteinheit zugeführt wird beträgt, erhalten wird.

## Revendications

1. Procédé de production d'une couche mince poreuse d'oxyde de zinc pour un substrat formé d'une pile solaire sensible aux colorants, comprenant les étapes consistant à :

appliquer un dépôt électrolytique cathodique à une solution électrolytique contenant un sel de zinc mélangé à un composé de gabarit à l'avance en présence d'un substrat souhaité,
déposer une couche mince d'oxyde de zinc comprenant le composé de gabarit adsorbé sur la surface interne de la couche mince sur le substrat, et
des moyens d'application pour désorber le composé de gabarit de la surface de la couche mince,
dans lequel le composé de gabarit présente des groupements d'ancrage choisis parmi les groupements carboxylate, sulfonate et phosphate et constitue un composé aromatique ayant des électrons $\pi$ réductibles par voie électrochimique.

2. Procédé de production d'une couche mince poreuse d'oxyde de zinc selon la revendication 1, dans lequel :

le composé de gabarit est désorbé de la surface de la couche mince par lavage avec une solution à base aqueuse avant oxydation du composé de gabarit.

3. Procédé de production de la couche mince poreuse d'oxyde de zinc pour le substrat de la pile solaire sensible aux colorants selon la revendication 1 ou la revendication 2, dans lequel :

le composé de gabarit a un potentiel de réduction électrochimique dans la plage de -0,7 V à -1,2 V.

4. Procédé de production d'une couche mince poreuse d'oxyde de zinc selon l'une quelconque des revendications précédentes, dans lequel le composé de gabarit est désorbé avec un rapport de désorption qui n'est pas inférieur à 90 %.

5. Procédé selon l'une quelconque des revendications précédentes, ladite couche mince d'oxyde de zinc étant obtenue en utilisant un halogénure de zinc comme sel de zinc dans des conditions telles que la quantité molaire d'ions de zinc arrivant à la surface d'un substrat par unité de temps puisse être d'au moins deux fois la quantité molaire de molécules d'oxygène réduites par unité de temps, et/ou dans des conditions telles que la quantité molaire d'un composé de gabarit fournie à la surface du substrat par unité de temps puisse être d'au moins 1/1000<sup>e</sup> de la quantité molaire de molécules d'oxygène fournies à la surface du substrat par unité de temps.

— (a)The absorption spectra of a porous zinc oxide thin film

··· (b)The absorption spectra of a zinc oxide/EY thin film

o (c)The working photocurrent spectrum of the thin film in (a)

# Figure.1

— (a)The absorption spectra of a zinc oxide/coumarin 343 composite thin film

··· (b)The absorption spectra of a porous zinc oxide thin film

o (c)The working photocurrent spectrum of the thin film in (a)

# Figure. 2

— (a)The absorption spectra of a zinc oxide/EY thin film
(initial adsorption)

✕ (b)The photocurrent spectrum of the thin film in (a)

# Figure. 3

— (a)The absorption spectra of a zinc oxide/EY thin film
(re-adsorption)

··· (b)The absorption spectra of a porous zinc oxide thin film

o (c)The working photocurrent spectrum of the thin film in (a)

# Figure. 4

The working photocurrent spectrum of a zinc oxide/EY
(re-adsorption)

O (a)Without drying treatment after desorption

▲ (b)With drying treatment after desorption(150℃ for 1 hour)

# Figure. 5

Figure. 6

Figure. 7

Stirring direction

Figure. 8

Figure. 9

Figure.1 0

Template compound
(dye)

ZnO

# Figure.11

Figure.12

Figure.13

Figure.14

# Figure.15

Figure.16

Figure.17

**EP 1 500 721 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8015097 B
- JP 2002184476 A

**Non-patent literature cited in the description**

- **GRAETZEL.** *Nature,* 1991, vol. 353, 737
- **TH. PAUPORTE ; T. YOSHIDA ; A. GOUX ; D. LINCOT.** *J. Electroanal. Chem.,* 2002, vol. 534, 55-64, J. Electroanal. Chem.